# EUROPEAN PATENT APPLICATION

(11) **EP 2 275 315 A1**
(43) Date of publication of application: **19.01.2011**
(21) Application number: 09729115.7
(22) Date of filing: 03.04.2009
(51) Int. Cl.: B60W 10/08, B60K 6/36, B60K 6/387, B60K 6/48, B60K 6/547, B60L 11/14, B60W 10/06, B60W 20/00

(54) **HYBRID POWER UNIT CONTROL SYSTEM**

(30) Priority: 04.04.2008 JP 2008098498
(71) Applicant: AISIN AI Co., Ltd., Nishio-shi Aichi-ken 445-0006 (JP); Toyota Jidosha Kabushiki Kaisha, Toyota-shi, Aichi 471-8571 (JP); Aisin Seiki Kabushiki Kaisha, Kariya-shi, Aichi 448-8650 (JP)
(72) Inventor: TANBA, Toshio, Nishio-shi Aichi 445-0006 (JP); FUKUHARA, Yuichi, Nishio-shi Aichi 445-0006 (JP); SASAKI, Kan, Nishio-shi Aichi 445-0006 (JP); MURAKAMI, Koji, Toyota-shi Aichi 471-8571 (JP); OMURA, Masahiro, Kariya-shi Aichi 448-8650 (JP)
(74) Representative: Lacey, Dean Andrew
(86) International application number: PCT/JP2009/056993
(87) International publication number: WO 2009/123315

(57) **Abstract**

[Subject]

In a hybrid drive power apparatus, distortional oscillation of power transfer shafts caused by fluctuation in output torque of an engine is restrained to prevent the occurrence of unpleasant noises such as hitting noise of gear teeth, harsh noise in the vehicle body and the like.

[Solution]

In a hybrid drive power apparatus of the type which comprises a first gear-shift mechanism assembled with a first input shaft to be applied with drive power from an engine through a first friction clutch for establishing a first drive train, a second gear-shift mechanism assembled with a second input shaft to be applied with the drive power of the engine through a second friction clutch for establishing a second drive train, a motor-generator in drive connection with the first input shaft or the second input shaft, and a driven mechanism to be driven by the drive power transmitted from an output shaft of the first gear-shift mechanism or from an output shaft of the second gear-shift mechanism, the motor-generator is activated as an electric motor when amplitude of fluctuation in rotation speed of the engine detected by a sensor increases more than a preset upper limit value of amplitude thereby to apply load torque in reverse phase relative to the fluctuation in rotation speed to the engine at the same period as that of the fluctuation in rotation speed..

## Description

### Field of the Invention:

The present invention relates to a hybrid drive power apparatus, particularly to a control system of a hybrid drive power apparatus suitable for applied to a power transmission of the dual-clutch type for a motor vehicle.

### Discussion of the Prior Art:

Disclosed in Japanese Patent Laid-open Publication No. 2005-186931 is a hybrid drive power apparatus applied to a power transmission of this type. The hybrid drive power apparatus includes first and second input shafts arranged to be selectively rotated by drive power of an engine transmitted thereto through a dual-clutch, first and second gear-shift mechanisms respectively assembled with first and second output shafts in parallel with the first and second input shafts, and a motor-generator in drive connection with the second output shaft to be activated as an electric motor for driving a set of driven road wheels in drive connection to the first or second output shaft when supplied with electric power from a battery and to be activated as a generator for charging the battery when driven by the driven road wheels.

### Problems to be solved:

If in the hybrid drive power apparatus for motor vehicles, distortional oscillation of power transfer shafts is caused by fluctuation in output torque of the engine, fluctuation in rotation speed of the engine becomes excessive. This causes noises such as hitting noise of gear teeth, harsh noise in the vehicle body. In a conventional prior art, a mass-damper was provided on a rotary portion of the clutch mechanism to restrain the occurrence of the distortional oscillation. This increases, however, the weight and manufacturing cost of the hybrid drive power apparatus.

### SUMMERY OF THE INVENTION

A primary object of the present invention is to effectively utilize the function of a motor-generator assembled in a hybrid drive power apparatus of this kind to overcome the problem described above.

According to the present invention, the object is accomplished by providing a control system of a hybrid drive power apparatus of the type which comprises a first gear-shift mechanism assembled with a first input shaft to be applied with drive power from an engine through a first friction clutch for establishing a first drive train, a second gear-shift mechanism assembled with a second input shaft to be applied with the drive power of the engine through a second friction clutch for establishing a second drive train, a motor-generator in drive connection with the first input shaft or the second input shaft, and a driven mechanism to be driven by the drive power transmitted from an output shaft of the first gear-shift mechanism or from an output shaft of the second gear-shift mechanism,
wherein the control system comprises a rotation speed sensor for detecting rotation speed of the engine, and control means for activating the motor-generator as an electric motor when amplitude of fluctuation in rotation speed of the engine detected by the speed sensor becomes more than a preset upper limit value of amplitude and for applying load torque in reverse phase relative to the fluctuation in rotation speed to the engine at the same duration as that of the fluctuation in rotation speed..

In a practical embodiment of the present invention, it is preferable that the control system includes means for increasing the output power of the engine when the rotation speed of the engine detected by the speed sensor decreases less than a preset lower limit value.

### Advantages of the Invention:

In the control system of the hybrid drive power apparatus, the motor-generator is activated as an electric motor under control of the control means in the occurrence of distortional oscillation in the power transmission caused by excessive fluctuation in rotation speed of the engine, and the engine is applied with load torque in reverse phase relative to the fluctuation in rotation speed at the same period as that of the fluctuation in rotation speed. With such control of the motor-generator and engine, fluctuation in output torque of the engine decreases, and the distortional oscillation in the power transmission is restrained by the torque of the motor-generator activated as the electric motor. This is effective to prevent the occurrence of unpleasant noises such as hitting noise of gear teeth, harsh noise in the vehicle body and the like caused by excessive fluctuation in rotation speed of the engine. As in the control system, only the motor-generator is controlled, the hybrid drive power apparatus can be provided without any increase of the weight and manufacturing cost.

In actual practices of the present invention, the control system may be arranged to activate the motor-generator as an electric motor when fluctuation in rotation speed of the engine detected by the speed sensor increases more than a preset upper limit value thereby to apply load torque in reverse phase relative to the fluctuation in rotation speed to the engine at the same period as that of the fluctuation in rotation speed and to increase the output power of the engine when the rotation speed of the engine decreases less than a preset lower limit value.
In such a case, even when the engine is applied with the load torque caused by activation of the motor-generator, decrease of the rotation speed less than the lower limit value caused by increase of the load torque does not occur since the rotation speed is recovered by increase of the output power of engine. As torque fluctuation of the engine is reduced by increase of the output power, the distortional oscillation of the power transfer shafts is restrained, and the occurrence of unpleasant noises such as hitting noise of gear teeth, harsh noise in the vehicle body is prevented.

Alternatively, the control means in the control system may comprises means for stopping the engine and activating the motor-generator as an electric motor when amplitude of fluctuation in rotation speed of the engine detected by the rotation speed senor increases more than the preset upper limit value thereby to transfer the power of the motor-generator to the driven mechanism through the gear shift mechanism assembled on the first or second shaft. In such a case, as the driven mechanism is driven by the operation of the motor-generator activated as the electric motor, the distortional oscillation of the power transfer shafts does not occur , and the occurrence of unpleasant noises such as hitting noise of gear teeth, harsh noise in the vehicle body is prevented.

### BRIEF DESCRIPTION OF THE DRAWINGS

In the drawings;
Fig. 1 is a skeleton view illustrating the whole construction of a hybrid drive power apparatus which is operated under control of a control system according to the present invention;
Fig. 2 is a flow chart of a control program executed by a controller in a first embodiment of the present invention shown in Fig. 1;
Fig. 3 illustrates operation of the hybrid drive power apparatus controlled by processing of the control program shown in Fig. 2;
Fig. 4 is a flow chart of a control program executed by a controller in a second embodiment of the present invention;
Fig. 5 illustrates operation of the hybrid drive power apparatus controlled by processing of the control program shown in Fig. 4; and
Fig. 6 is a skeleton view illustrating a modification of the hybrid drive power apparatus shown in Fig. 1.

### DESCRIPTION OF THE PREFERRED EMBODIMENT

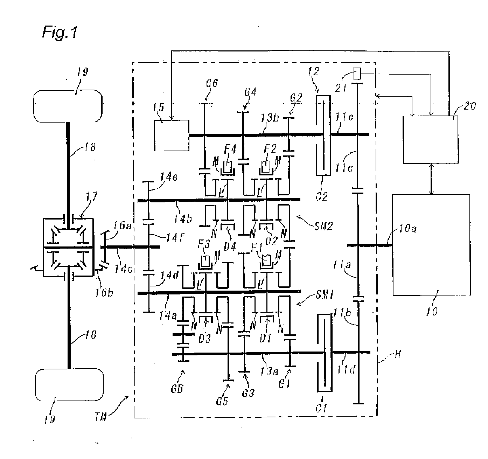

Hereinafter, a control system according to the present invention in a first embodiment of a hybrid drive power apparatus with will be described with reference to Figs. 1-4. In this embodiment, the hybrid drive power apparatus is adapted to an automatic power transmission TM of forward six speed stages and a backward stage.

The automatic power transmission TM is in the form of a gear transmission of the dual-clutch type wherein a first input shaft 13a and a second input shaft 13b are rotatably mounted in parallel within a transmission housing H and drivingly connected to an output shaft 10a of an engine 10 through a first friction clutch C1 and a second friction clutch C2. An input member of first friction clutch C1 is connected to a support shaft 11d of a driven gear 11b in mesh with a drive gear 11a for rotation with the output shaft 10a of engine 10. Similarly, an input member of friction clutch C2 is connected to a support shaft 11e of a driven gear 11c in mesh with the drive gear 11a for rotation with the output shaft 10a of engine 10. A first output shaft 14a and a second output shaft 14b are arranged respectively in parallel with the input shafts 13a and 13b and drivingly connected to a third output shaft 14c through drive gears 14d and 14e in mesh with a driven gear 14f supported on the third output shaft 14c. The third output shaft 14c is drivingly connected to a set of driven road wheels 19 through a drive pinion 16a, a ring gear 16b, a differential gear 17 and a set of axle shafts 18, 18.

The first and second friction clutches C1 and C2 in the form of a dual-clutch 12 are brought into half engagement in transit of changeover of shift stages for change-speed to increase or decrease transfer torque relatively in reverse in a normal condition. After changeover of the shift stage for change-speed, the dual-clutch 12 is operated under control of a controller 20 as described later so that one of the friction clutches is completely engaged to maximize the transfer torque, while the other friction clutch is completely disengaged to make the transfer torque zero (0).

A first gear-shift mechanism SM1 is provided between first input shaft 13a and first output shaft 14a, and a second gear-shift mechanism SM2 is provided between second input shaft 13b and second output shaft 14b. The first gear-shift mechanism SM1 includes gear sets G1, G3, G5 for first, third and fifth speed stages (odd change-speed stages) and a reverse gear train GB for backward. Each drive gear of gear sets G1, G3, G5 and reverse gear train GB is fixedly supported on the first input shaft 13a for rotation therewith, and each driven gear of the gear sets and reverse gear train is rotatably supported on the first output shaft 14a. A first changeover clutch D1 is provided between the driven gear of first speed gear set G1 and the driven gear of third speed gear set G3 for selective connection with the first output shaft 14a. A third changeover clutch D3 is provided between the driven gear of fifth speed gear set G5 and the driven gear of reverse gear train GB for selective connection with the first output shaft 14a. An idle gear is interposed between the drive and driven gears of reverse drive train GB.

The second gear-shift mechanism SM2 includes gear sets G2, G4, G6 for second, fourth and sixth speed stages (even change-speed stages). Each drive gear of the gear sets G2, G4, G6 is fixedly supported on the second input shaft 13b for rotation therewith, and each driven gear of the gear sets is rotatably supported on the second output shaft 14b. A second changeover clutch D2 is provided between the driven gear of second speed gear set G2 and the driven gear of fourth speed gear set G4 for selective connection with the second output shaft 14b. A fourth changeover clutch D4 is provided at one side of the driven gear of sixth speed gear set G6 for selective connection with the second output shaft 14b.

The changeover clutches D1∼D4 each are in the form of a well known synchromesh mechanism which includes a clutch hub L respectively fixed to the first output shaft 14a and the second output shaft 14b and a shift sleeve (a shift member) M in splined engagement with the clutch hub. When shift forks F1∼F4 are selectively shifted in an axial direction, the shift sleeve M is engaged with a side gear of the driven gear for selective connection with the clutch hub L.

In the first embodiment, a motor-generator 15 is drivingly connected to the second input shaft 13b, and a rotation speed sensor 21 is provided for detecting rotation speed of the driven gear 11c driven by drive power of engine 10. The controller 20 for the hybrid drive power apparatus is connected to the motor-generator 15 and rotation speed sensor 21.

In a condition where the output power of engine 10 is not sufficient, the controller 20 supplies electric power to the motor-generator 15 from a battery (not shown) to activate the motor-generator as an electric motor and causes the engine 10 to cooperate with the motor-generator for driving the driven road wheels 19. In a condition where the engine 10 is driven by the driven road wheels 19 or the output power of engine 10 is sufficient, the motor-generator 15 is driven by the second input shaft 13b to charge the battery under control of the controller 20. As described later, the controller 20 activates the motor-generator 15 as a generator in accordance with operation of the hybrid drive power apparatus for charging the battery and for applying load torque to the engine 10. The rotation speed sensor 21 is in the form of a magnetic sensor for detecting rotation speed of the driven gear 11c, and the controller 20 receives detection signals of the rotation speed sensor 21 to calculate rotation speed of the engine based on timing of the detection signals from sensor 21 and to calculate fluctuation and deceleration S in rotation speed of the engine.

Hereinafter, the function of controller 20 in the hybrid drive power apparatus will be described. Assuming that the vehicle is inoperative in a stopped condition, both the first and second friction clutches C1 and C2 are in a released condition, and each changeover clutch D1-D4 of the first and second gear-shift mechanisms SM1 and SM2 is in a neutral position as shown in Fig. 1. When a shift lever (not shown) of the power transmission is shifted to a forward position to start the vehicle, the controller 20 causes the first shift fork F1 to shift the sleeve M of first changeover clutch D1 rightward so that a drive train at the first speed stage is established by the first speed gear set G1 in the first gear-shift mechanism SM1. When the rotation speed of engine 10 increases and exceeds a predetermined low speed, the controller 20 causes the first friction clutch C1 of dual-clutch 12 to gradually engage so that the drive torque of engine 10 is transmitted to the driven road wheels 19 through the first input shaft 13a, first speed gear set G1, first changeover clutch D1, first output shaft 14a, gears 14d, 14f, third output shaft 14c, gears 16a, 16b, differential gear 17 and axle shafts 18, 18 to start the vehicle at the first speed.

When the vehicle speed becomes suitable for travel at the second speed, the controller 20 causes the shift fork F2 to shift the sleeve M of second changeover clutch D2 rightward so that a drive train at the second speed stage is established by the second speed gear set G2 in the second gear-shift mechanism SM2 and causes the second friction clutch C2 to engage after release of first friction clutch C1. After engagement of the second friction clutch C2, the controller 20 causes the shift fork F1 to return the sleeve M of first changeover clutch D1 to the neutral position. Thereafter, the controller 20 causes the first and second friction clutches C1 and C2 to alternately engage for sequentially establishing a drive train at the other speed stage suitable for travel condition of the vehicle in a similar manner described above. Shift-down of the change-speed stage is effected by reverse control of the foregoing control.

When the shift lever is shifted to a reverse position in a stopped condition of the vehicle, the controller 20 causes the shift fork F3 to shift the sleeve M of third changeover clutch D3 leftward for establishing a drive train at the reverse stage. When the rotational speed of engine 10 increases, the controller 20 causes the first friction clutch C1 to gradually engage for transmitting the drive torque of engine 10 to the first output shaft 14a through the reverse gear train GB to effect backward movement of the vehicle.

When the motor-generator 15 is activated as an electric motor under control of the controller 20 in a condition where the vehicle is being driven by the drive power of engine 10, the motor-generator 15 cooperates with the engine 10 to drive the driven road wheels 19, and the battery is charged by operation of the motor-generator 15. In such an instance, the driven road wheels 19 are driven by the drive power of motor-generator 15 except for only the second gear-shift mechanism is used.

### First embodiment:

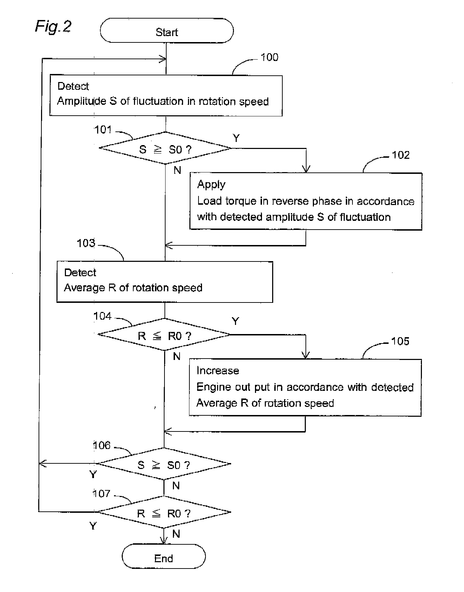

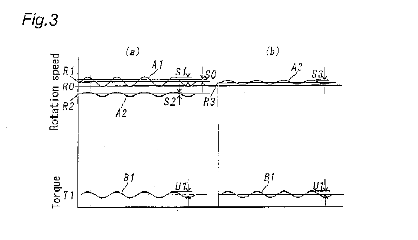

Hereinafter, a method for restraining excessive increase of fluctuation in rotation speed of power transfer shafts in the hybrid drive power apparatus will be described with reference to the flow chart of Fig. 2 and the graph of Fig. 3.

If distortional oscillation of the power transfer shafts in the hybrid drive power apparatus is caused by fluctuation in output torque of the engine, unpleasant noises such as hitting noise of gear teeth, harsh noise in the vehicle body will occur. In the hybrid drive power apparatus, it is able to experimentally determine an upper limit of amplitude of the fluctuation in rotation speed for eliminating the occurrence of the unpleasant noises. Accordingly, in this embodiment, the experimentally preset upper limit value of fluctuation amplitude is defined as "SO". Also, when an average value of rotation speed of the engine decreases less than a lower limit value, the fluctuation in rotation speed increases to cause operation of the engine unstable. In the hybrid drive power apparatus, it is also able to experimentally determine such a lower limit of the average value for restraining increase of the fluctuation in rotation speed. Accordingly, in this embodiment, the experimentally preset lower limit value of the average of rotation speed is defined as "RO".

During operation of the hybrid drive power apparatus, the controller 20 executes processing of the control program shown in Fig. 2 at interval of a short period of time as follows. When amplitude S of fluctuation in rotation speed of driven gear 11c is less than the upper limit value SO, the controller 20 determines a "No" answer at step 101 after detected the amplitude of fluctuation in rotation speed of driven gear 11c at step 100 and causes the program to proceed to step 103. When an average R of rotation speed of driven gear 11c decreases less than the lower limit value RO, the controller 20 determines a "No" answer at step 104 after detected the average R of rotation speed at step 103 and causes the program to proceed to step 106. Then, the controller 20 determines a "No" answer respectively at step 106 and 107 and ends processing of the control program.

When amplitude S of fluctuation in rotation speed of driven gear 11c increases as shown by a value S1 as shown in Fig. 3 in a condition where the average R of rotation speed of driven gear 11c is more than the lower limit value RO as shown by a value R1 in Fig. 3, the controller 20 determines a "Yes" answer at step 101 after detected the amplitude S1 at step 100 and causes the program to proceed to step 102. Then, the controller 20 causes the motor-generator 15 to activate as an electric motor at step 102 so that the engine is applied with load torque B1 (an average value T1, amplitude U1) in accordance with a difference between the upper limit value SO of amplitude and the amplitude S1 of fluctuation detected at the same period as that of the fluctuation in rotation speed of driven gear 11c. At this time, the phase of load torque applied to engine 10 is the same as that of the fluctuation in rotation speed of driven gear 11c.

When the load torque B1 is applied to the engine by processing at step 102, the amplitude of fluctuation decreases less than the upper limit value SO as shown by a value S2 in Fig. 3 (a), while the average value of rotation speed of driven gear 11c decreases less than the lower limit value RO as shown by the character R2 in Fig. 3 (a). In such an instance, the controller 20 detects the average value R2 of rotation speed of driven gear 11c less than the lower limit value RO at step 103 and determines a "Yes" answer at step 104. Then, the controller 20 causes the program to proceed to step 105 and increases the output of engine 10 at step 105 in accordance with a difference between the detected average R2 and the lower limit value RO. Subsequently, the controller 20 determines a "No" answer respectively at step 106 and 107 and ends processing of the control program.

When the output of engine 10 is increased by processing at step 105, the rotation speed of driven gear 11c becomes more than the lower limit value RO as shown by the character A3 in Fig. 3 (b). With such control, the operation of engine 10 becomes stable, and the amplitude S3 of fluctuation in rotation speed becomes less than the amplitude S2. Thus, the controller determines a "No" answer respectively at step 101 and 104.

After executed the foregoing processing of the control program, the controller 20 detects the amplitude S3 of fluctuation in rotation speed of driven gear 11c and compares the detected amplitude S3 with the upper limit value SO. In a condition where the detected amplitude S3 is less than the upper limit value SO, the controller 20 determines a "No" answer at step 101 and causes the program to proceed to step 103 for detecting the average value R3 of rotation speed of driven gear 11c. When the detected average value R3 is more than the lower limit value RO, the controller 20 determines a "No" answer at step 104 and ends the processing of the control program after executed processing at step 106 and 107.

During operation of the hybrid drive power apparatus under control of the controller 20, the rotation speed of driven gear 11c is detected by the rotation speed sensor 21. When distortional oscillation of the power transfer shafts is caused by torque fluctuation of the engine 10, the amplitude of fluctuation in rotation speed of the driven gear increases more than the upper limit value SO. In such an instance, the motor-generator 15 is activated as an electric motor to apply load torque to the engine 10 in accordance with a difference between the amplitude of the detected fluctuation and the upper limit value SO at the same period as that of the detected fluctuation. Under such control of the hybrid drive power apparatus, the torque fluctuation of engine 10 is reduced to restrain distortional oscillation of the power transfer shafts and to prevent the occurrence of unpleasant noises such as hitting noise of gear teeth, harsh noise in the vehicle body and the like. As only the operation of motor-generator 15 is controlled by the foregoing execution of the control program, the occurrence of distortional oscillation on the power transfer shafts is prevented without any change in construction of the apparatus and any increase of manufacturing cost.

In the foregoing control method, the motor-generator 15 is activated as an electric motor by processing at step 102 of the control program to apply the load torque B1 to the engine 10, and the output of engine 10 is increased by processing at step 105 of the control program to stabilize operation of the engine when the average value of rotation speed of driven gear 11c decreases less than the lower limit value. The present invention is, however, not limited to the control method. Alternatively, the load torque applied to the engine by processing at step 102 of the control program may be reduced with an average value T1 or the motor-generator 15 may be activated as an electric motor to apply drive torque to the power transfer shafts in the same direction as the drive torque of engine 10. With such control of the load torque or the motor-generator, the average value R2 of rotation speed of driven gear 11c is maintained more than the lower limit value RO after processing at step 102 of the control program. In such an instance, it becomes unnecessary to increase the output of engine 10 by processing at step 105 of the control program.

### Second embodiment:

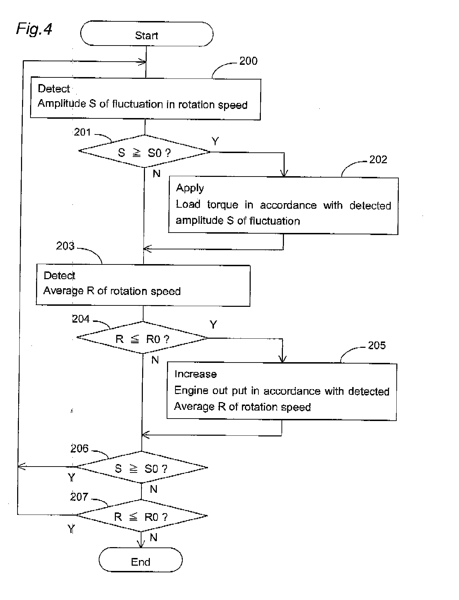

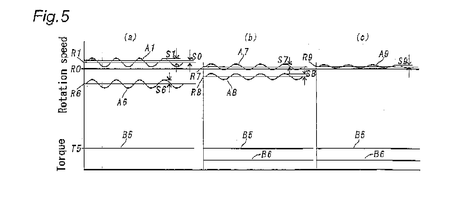

Hereinafter, a control method for restraining excessive increase of amplitude of fluctuation in rotation speed of power transfer shafts in the hybrid drive power apparatus will be described with reference to Figs. 4 and 5. In this second embodiment, an upper limit value SO of amplitude of fluctuation in rotation speed of the power transfer shafts and a lower limit value RO of the rotation speed are determined in the same manner as in the first embodiment. This second embodiment is **characterized in that** the motor-generator 15 is activated to apply torque to the engine without being fluctuated in accordance with amplitude S of fluctuation in rotation speed of driven gear 11c.

During operation of the hybrid drive power apparatus in this second embodiment, the controller 20 executes processing of a control program shown in Fig. 4 at interval of a short period of time. In a condition where amplitude S of fluctuation in rotation speed of driven gear 11c is less than the upper limit value SO and where an average value R of the rotation speed of driven gear 11c is more than the lower limit value RO, the operation of engine 10 is maintained in a stabilized condition. Thus, the controller 20 does not execute processing at step 202 and 205.

When the amplitude S of fluctuation in rotation speed of driven gear 11c increases as shown by the character A1 in Fig. 5 (a) in a condition where the average value R of rotation speed of driven gear 11c is more than the lower limit value RO, the controller 20 detects the amplitude S1 of fluctuation in rotation speed of driven gear 11c as a value S1 at step 200 and compares the detected amplitude S1 with the upper limit value SO at step 201. In such an instance, the controller 20 determines a "Yes" answer at step 201 and causes the program to proceed to step 202. Then, the controller 20 causes the motor-generator 15 to activate as an electric motor at step 202 to apply constant load torque B5 to the engine 10 in accordance with a difference between the amplitude S1 of fluctuation and the upper limit value SO of amplitude. When the engine 10 is applied with the load torque B5, the amplitude of fluctuation in rotation speed of driven gear 11c decreases as shown by a value S6 (S6 ≧SO) in Fig. 5 (a), while the average value of rotation speed decreased less than the lower limit value RO (R6 ≦ RO) as shown by the character A6 in Fig. 5 (a). At this time, the controller 20 detects the average value of rotation speed of driven gear 11c as a value R6 at step 203 and compares the detected average value R6 with the lower limit value RO at step 204. As the detected average value R6 is less than the lower limit value RO, the controller 20 determines a "Yes" answer at step 204 and causes the program to proceed to step 205. Then, the controller 20 causes the output of engine 10 at step 205 to increase in accordance with a difference between the average value R6 and the lower limit value RO and causes the program to proceed to step 206. If the amplitude S6 of fluctuation is more than or equal to the upper limit value SO (S6 ≧ SO) and the average value R6 of rotation speed is less than or equal to the lower limit value RO (R6 ≦ RO), the controller 20 determines a "Yes" answer at step 206 and causes the program to return to step 200.

When the output of engine 10 is increased by processing at step 205, the rotation spend of driven gear 11c increases as shown by the character A7 in Fig. 5(b). As the average value R7 of rotation speed of driven gear 11c increases more than the lower limit value RO, the operation of engine 10 is maintained in a stabilized condition, and the amplitude S7 of fluctuation in rotation speed decreases less than the amplitude S6.

After the program is returned to step 200 from step 207, the controller 20 detects amplitude S7 of fluctuation in rotation speed of driven gear 11c and compares the detected amplitude S7 with the upper limit value SO at step 201. When the detected amplitude S7 is more than or equal to the upper limit value SO (S7 ≥SO), the controller 20 determines a "Yes" answer at step 201 and causes the program to proceed to step 202. Then, the controller causes the motor-generator 15 to activate as an electric motor so that constant load torque B6 (a value T6) is added to the load torque B5 in accordance with a difference between the detected amplitude S7 and the upper limit value SO and causes the program to proceed to step 203.

When the load torque B6 is added to the load torque B5 by processing at step 202, amplitude of fluctuation in rotation speed of driven gear 11c becomes substantially the same as the amplitude S7 (S8 ≧ SO) as shown by the character S8 in Fig. 5(b), while the average of rotation speed becomes less than the lower limit value RO as shown by the character A8 in Fig. 5 (b). In such an instance, the controller 20 detects the average value of R8 of rotation speed of driven gear 11c and compares the detected average R8 with the lower limit value RO at step 204. As the average value R8 of rotation speed is less than the lower limit value RO (R8 ≦ RO), the controller determines a "Yes" answer at step 204 and causes the program to proceed to step 205. Then, the controller causes the output of engine 10 to increase in accordance with a difference between the average value R8 and the lower limit value RO. If the amplitude S8 is still more than the upper limit value SO in a condition where the average R of rotation speed is less than the lower limit value RO, the controller 20 determines "Yes" answer at step 206 and causes the program to return to step 200. When the average A8 of rotation speed increases more than the lower limit value RO as shown by the character A9 in Fig. 5 (c) in a condition where the amplitude S8 of fluctuation in rotation speed is less than the upper limit value SO, the controller will end processing of the control program without execution of processing at step 202 and 205.

During operation of the hybrid drive power apparatus under control of the controller 20, the rotation speed of driven gear 11c is detected by the rotation speed sensor 21. When distortional oscillation of the power transfer shafts is caused by torque fluctuation of the engine 10, the amplitude of fluctuation in rotation speed of driven gear 11c becomes more than the upper limit value SO. In such an instance, the motor-generator 15 is activated as an electric motor to apply load torque to the engine 10 in accordance with a difference between the amplitude of the detected fluctuation and the upper limit value SO. When the rotation speed detected by sensor 21 becomes less than the preset lower limit value RO due to increase of load applied to the engine 10, the output of engine 10 is increased to recover the rotation speed of driven gear 11c more than the lower limit value RO. Thus, the torque fluctuation of engine 10 is reduced to restrain distortional oscillation of the power transfer shafts and to prevent the occurrence of unpleasant noises such as hitting noise of gear teeth, harsh noise in the vehicle body and the like. As only the operation of motor-generator 15 is controlled by the foregoing execution of the control program, the occurrence of distortional oscillation of the power transfer shafts is prevented without any change in construction of the apparatus and any increase of manufacturing cost.

Although in the second embodiment, the load torque applied to the engine 10 by processing at step 202 of the control program is determined in accordance with a difference between the amplitude of detected rotation speed and the upper limit value SO, the load torque may be determined to a constant value. In addition, the output of engine 10 may be increased to a preset constant value by processing at step 205 of the control program.

### Third embodiment:

In a third embodiment of the present invention, the engine is stopped and the motor-generator 15 is activated as an electric motor to drive the driven road wheels 19 when amplitude of fluctuation in rotation speed of driven gear 11c increases more than the preset upper limit value. Other control method is substantially the same as in the first and second embodiments.

In this embodiment, the driven road wheels 19 are driven by the output torque of engine 10 under control of the controller 20 when amplitude S of fluctuation in rotation speed of driven gear 11c is small in a condition where an average R of rotation speed is more than a preset lower limit value. When amplitude S1 of fluctuation in rotation speed of driven gear 11c increases more than a preset upper limit value SO during operation of the hybrid drive power apparatus, the controller 20 causes the motor-generator 15 to activate as an electric motor for driving the driven road wheels 19 and stops the engine 10. Assuming that even gear sets G2, G4, G6 were selectively used when the motor-generator 15 is activated, the second gear shift mechanism SM2 and the second friction clutch are brought into engagement to establish a drive train for driving the driven road wheels 19 through the second output shaft 14b, output gears 14e, 14f, third output shaft 14c, drive pinion 16a, ring gear 16b, differential gear 17 and axle shaft 18. When odd gear sets G1, G3, G5 or reverse gear train GB were selectively used, the first gear shift mechanism SM1 and the first friction clutch C1 are brought into engagement. In such an instance, the second friction clutch C2 may be brought into engagement for driving the driven road wheels 19 or the second gear shift mechanism SM2 and the second friction clutch C2 may be brought into engagement for driving the driven road wheels 19 in a condition where the change-speed stage was shifted down and where the first friction clutch C1 was released.

In such operation of the hybrid drive power apparatus, any distortional oscillation of the power transfer shafts does not occur since only the motor-generator 15 is activated as the electric motor for driving the drive road wheels 19. Thus, unpleasant noises such as hitting noise, harsh noise in the vehicle body and the like will not occur. As only the operation of motor- generator 15 is controlled, the occurrence of distortional oscillation on the power transfer shafts is prevented without any change in construction of the apparatus and any increase of manufacturing cost. Although in the embodiments, an average value is used to represent a magnitude of fluctuation in rotation speed, a maximum or minimum value may be used to represent the magnitude of fluctuation in rotation speed.

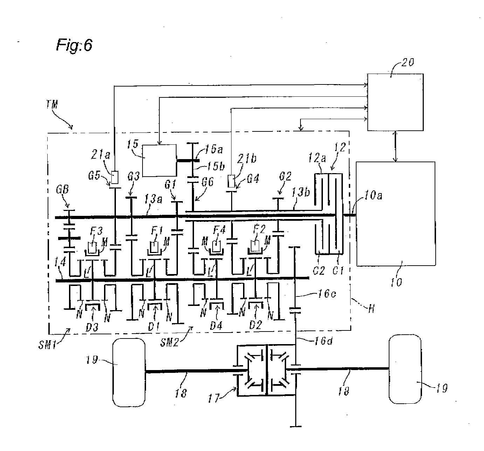

The present invention may be adapted to an automatic transmission TM of the dual clutch type shown in Fig. 6. In the automatic transmission, first and second input shafts 13a and 13b are coaxially arranged to be driven by engine 10 through a dual-clutch 12 composed of first and second friction clutches C1 and C2. The second input shaft 13b is in the form of a tubular shaft in surrounding relationship with first input shaft 13a. The three output shafts 14a, 14b, 14c in the gear transmission TM shown in Fig. 1 are in the form of a single output shaft 14 in parallel with the coaxial first and second input shafts 13a, 13b. A clutch cover 12a of dual-clutch 12 is connected to the output shaft 10a of engine 10 so that the first and second input shafts 13a and 13b are driven by engine 10 through dual-clutch 12. The output shaft 14 is drivingly connected to the driven road wheels 19 through final reduction gears 16c, 16d, differential gear set 17 and axle shafts 18, 18.

A first gear-shift mechanism SM1 is arranged between a rear half portion of first input shaft 13a and output shaft 14, and A second gear-shift mechanism SM2 is arranged between second input shaft 13b and output shaft 14. These gear-shift mechanisms SM1 and SM2 are substantially the same in construction as those in the first embodiment shown in Fig. 1. The motor-generator 15 is drivingly connected to the second input shaft 13b through a sixth speed gear set G6 in mesh with a gear 15b fixed to its output shaft 15a. The drive gear of firth speed gear set G5 is provided with a first rotation speed sensor 21a, and the drive gear of fourth speed gear set G4 is provided with a second rotation speed sensors 21b. The rotation speed sensors 21a and 21b are substantially the same as the rotation speed sensor 21 in the transmission shown in Fig. 1. The function of the automatic transmission is substantially the same as that of the gear transmission shown in Fig. 1.

### DESCRIPTION OF REFERENCE NUMERALS

10...engine, 12...Dual-clutch, 13a...First input shaft, 13b...Second input shaft, 14, 14a, 14b ... Output shaft (First output shaft, Second output shaft), 15...Motor-generator, 19...Drive road wheels, 21, 21a, 21b...Rotation speed sensor (First rotation speed sensor, Second rotation speed sensor), C1...First friction clutch, C2...Second friction clutch, SM1...First gear-shift mechanism, SM2 ..Second gear-shift mechanism.

## Claims

1. A control system for a hybrid drive power apparatus of the type which comprises a first gear-shift mechanism assembled with a first input shaft to be applied with drive power from an engine through a first friction clutch for establishing a first drive train, a second gear-shift mechanism assembled with a second input shaft to be applied with the drive power of the engine through a second friction clutch for establishing a second drive train, a motor-generator in drive connection with the first input shaft or the second input shaft, and a driven mechanism to be driven by the drive power transmitted from an output shaft of the first gear-shift mechanism or from an output shaft of the second gear-shift mechanism,
wherein the control system comprises a rotation speed sensor for detecting rotation speed of the engine, and control means for activating the motor-generator as an electric motor when amplitude of fluctuation in rotation speed of the engine detected by the speed sensor becomes more than a preset upper limit value of amplitude and for applying load torque in reverse phase relative to the fluctuation in rotation speed to the engine at the same period as that of the fluctuation in rotation speed.

2. A control system for a hybrid drive power apparatus as claimed in claim 1, wherein the control means comprises means for increasing the output power of the engine when the rotation speed of the engine detected by the speed sensor decreases less than a preset lower limit value.

3. A control system for a hybrid drive power apparatus of the type which comprises a first gear-shift mechanism assembled with a first input shaft to be applied with drive power from an engine through a first friction clutch for establishing a first drive train, a second gear-shift mechanism assembled with a second input shaft to be applied with the drive power of the engine through a second friction clutch for establishing a second drive train, a motor-generator in drive connection with the first input shaft or the second input shaft, and a driven mechanism to be driven by the drive power transmitted from an output shaft of the first gear-shift mechanism or from an output shaft of the second gear-shift mechanism,
wherein the control system comprises a rotation speed sensor for detecting rotation speed of the engine, and control means for activating the motor-generator as an electric motor thereby to apply load torque to the engine in accordance with fluctuation of the detected rotation speed when amplitude of fluctuation in rotation speed detected by the speed sensor becomes more than a preset upper limit value of amplitude and for increasing the output power of the engine when the fluctuation in rotation speed of the engine becomes less than a preset lower limit value.

4. A control system for a hybrid drive power apparatus of the type which comprises a first gear-shift mechanism assembled with a first input shaft to be applied with drive power from an engine through a first friction clutch for establishing a first drive train, a second gear-shift mechanism assembled with a second input shaft to be applied with the drive power of the engine through a second friction clutch for establishing a second drive train, a motor-generator in drive connection with the first input shaft or the second input shaft, and a driven mechanism to be driven by the drive power transmitted from an output shaft of the first gear-shift mechanism or from an output shaft of the second gear-shift mechanism,
wherein the control system comprises a rotation speed sensor for detecting rotation speed of the engine, and control means for stopping the engine and activating the motor-generator as an electric motor when amplitude of fluctuation in rotation speed detected by the rotation speed sensor increase more than a preset upper limit value of amplitude thereby to transfer the power of the motor-generator to the driven mechanism through the gear shift mechanism assembled on the first or second input shaft.
